# EUROPÄISCHE PATENTSCHRIFT

(11) **EP 2 552 174 B1**
(45) Veröffentlichungstag und Bekanntmachung des Hinweises auf die Patenterteilung: **26.09.2018**
(21) Anmeldenummer: 12175931.0
(22) Anmeldetag: 11.07.2012
(51) Int. Cl.: H05B 6/12

(54) **Kochfeldvorrichtung**
Dispositif de champ de cuisson
Hotplate device

(30) Priorität: 28.07.2011 ES 201131290
(43) Veröffentlichungstag der Anmeldung: 30.01.2013
(73) Patentinhaber: BSH Hausgeräte GmbH, 81739 München (DE)
(72) Erfinder: Franco Gutierrez, Carlos, 50017 Zaragoza (ES); Garcia Jimenez, Jose-Ramon, 50009 Zaragoza (ES); Garcia Martinez, Jose Andres, 50014 Zaragoza (ES); Garde Aranda, Ignacio, 50012 Zaragoza (ES); Llorente Gil, Sergio, 50009 Zaragoza (ES); Lopez Nicolas, Gonzalo, 50001 Zaragoza (ES); Paesa García, David, 50015 Zaragoza (ES); Palacios Tomas, Daniel, 50008 Zaragoza (ES); Sagües Blázquiz, Carlos, 50018 Zaragoza (ES)

(56) Entgegenhaltungen:
- WO-A1-2008/101766
- DE-A1-102010 063 228
- FR-A1- 2 315 819
- JP-A- 2009 011 400

## Beschreibung

Die Erfindung geht aus von Kochfeldvorrichtung nach dem Oberbegriff des Anspruchs 1. Es sind Induktionskochfeldvorrichtungen mit länglichen Induktoren bekannt.

Die Aufgabe der Erfindung besteht insbesondere darin, eine gattungsgemäße Vorrichtung mit verbessertem Komfort bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können. Das Dokument FR 2 315 819 offenbart eine Kochfeldvorrichtung gemäß des Oberbegriffs von Anspruch 1.

Die Erfindung geht aus von einer Kochfeldvorrichtung, insbesondere einer Induktionskochfeldvorrichtung, mit zumindest einem Grundkörper, zumindest einem ersten Heizelement, das eine längliche Form aufweist, und mit zumindest einer Steuereinheit.

Es wird vorgeschlagen, dass die Kochfeldvorrichtung zumindest eine Aktoreinheit aufweist, die dazu vorgesehen ist, zumindest das erste Heizelement bezüglich des Grundkörpers zu bewegen. Unter einem "Grundkörper" soll ein Bauteil verstanden werden, das dazu vorgesehen ist, die Komponenten der Kochfeldvorrichtung aufzunehmen. Insbesondere ist der Grundkörper dazu vorgesehen, insbesondere durch seine Form, die Kochfeldvorrichtung zumindest in eine Raumrichtung, insbesondere in fünf Raumrichtungen, zumindest großteils abzugrenzen. Insbesondere ist der Grundkörper als Schale ausgebildet. Unter einem "Heizelement" soll ein Element verstanden werden, das dazu vorgesehen ist, elektrische Energie, insbesondere mit einem Wirkungsgrad größer als 50 %, vorteilhaft größer als 70 %, vorzugsweise größer als 90%, in Wärme und/oder Wärmestrahlung umzuwandeln. Insbesondere ist ein Heizelement dazu vorgesehen, in zumindest einem Betriebsmodus eine Leistung von zumindest 50 W, insbesondere zumindest 200 W, vorteilhaft zumindest 1000 W, vorzugsweise zumindest 2000 W, umzusetzen. Insbesondere beträgt eine von dem Heizelement abgegebene Wärmeleistung maximal einer elektrischen Leistung, die in dieses eingespeist wird. Vorzugsweise ist das Heizelement dazu vorgesehen, auf einer Kochfeldplatte aufgestelltes Gargeschirr, insbesondere Töpfe und/oder Pfannen, zu erwärmen. Vorzugsweise ist das Heizelement in einer Betriebsposition unterhalb der Kochfeldplatte angeordnet. Insbesondere ist das Heizelement als Induktionsheizelement ausgebildet. Unter einem "Induktionsheizelement" soll insbesondere ein Heizelement verstanden werden, das dazu vorgesehen ist, einen hochfrequenten Wechselstrom, insbesondere einen Wechselstrom mit einer Frequenz zwischen 20 kHz und 100 kHz, in ein magnetisches Wechselfeld zu wandeln, welches dazu vorgesehen ist, durch Induktion und/oder Ummagnetisierungseffekte in einem metallischen, insbesondere ferromagnetischen, Körper, insbesondere in einem Heizkörper und/oder einem Gargeschirr, Wärme zu erzeugen. Insbesondere weist ein Induktionsheizelement zumindest einen gewickelten, insbesondere hohlen, Leiter auf. Darunter, dass das Heizelement eine "längliche Form" aufweist, soll verstanden werden, dass eine Breite des Heizelements maximal 95 %, insbesondere maximal 85 %, vorteilhaft maximal 75 %, besonders vorteilhaft maximal 55 %, vorzugsweise maximal 35 % einer Länge des Heizelements entspricht. Insbesondere weist das Heizelement zumindest in einer Aufsicht eine ovale, insbesondere eine elliptische und/oder stadionartige Form auf. Weiterhin sind zumindest im Wesentlichen rechteckige Formen denkbar. Unter einer "Länge" des Heizelements soll die größte Ausdehnung des Heizelements verstanden werden. Unter einer "Breite" des Heizelements soll insbesondere die größte Ausdehnung des Heizelements in einer Richtung verstanden werden, die zumindest im Wesentlichen senkrecht zu einer Richtung, also einer Längsrichtung, orientiert ist, entlang der die Ausdehnung des Heizelements der Länge entspricht und die in einem betriebsbereiten Zustand zumindest im Wesentlichen parallel zu der Kochfeldplatte orientiert ist. Darunter, dass zwei Richtungen "im Wesentlichen parallel" liegen, soll verstanden werden, dass sich zumindest zwei Geraden, die jeweils parallel zu unterschiedlichen der Richtungen sind, einen Winkel einschließen, der kleiner ist als 30°, insbesondere kleiner ist als 15°, vorteilhaft kleiner ist als 5° und vorzugsweise kleiner ist als 1°. Darunter, dass zwei Richtungen "im Wesentlichen senkrecht" zueinander orientiert sind, soll insbesondere verstanden werden, dass sich zumindest zwei Geraden, die jeweils parallel zu unterschiedlichen der Richtungen sind, in einem Winkel schneiden, der maximal 30°, insbesondere maximal 15°, vorteilhaft maximal 5°, vorzugsweise maximal 1° von 90° abweicht. Unter einer "Steuereinheit" soll eine elektronische Einheit verstanden werden, die vorzugsweise in einer Steuer- und/oder Regeleinheit einer Kochfeldvorrichtung zumindest teilweise integriert ist und die vorzugsweise dazu vorgesehen ist, zumindest eine Leistungseinstellung des Heizelements und/oder die Aktoreinheit zu steuern und/oder zu regeln. Vorzugsweise umfasst die Steuereinheit eine Recheneinheit und insbesondere zusätzlich zur Recheneinheit eine Speichereinheit mit einem darin gespeicherten Steuer- und/oder Regelprogramm, das dazu vorgesehen ist, von der Recheneinheit ausgeführt zu werden. Unter "vorgesehen" soll insbesondere speziell programmiert, ausgelegt und/oder ausgestattet verstanden werden. Unter einer "Aktoreinheit" soll eine Einheit verstanden werden, die zumindest einen Aktor aufweist. Insbesondere ist die Aktoreinheit mit dem Heizelement mechanisch gekoppelt. Vorzugsweise ist die Aktoreinheit dazu vorgesehen, durch Ansteuerung eine Position des Heizelements zu verändern. Insbesondere verändert die Aktoreinheit durch Ansteuerung von der Steuereinheit die Position des Heizelements. Unter einem "Aktor" soll insbesondere ein mechatronisches Bauteil verstanden werden, das dazu vorgesehen ist, elektrische Signale in eine Bewegung, insbesondere in eine Schwenk- und/oder Linearbewegung, umzusetzen. Insbesondere beträgt eine Bewegungsgeschwindigkeit, mit der der Aktor das Heizelement bewegt, mehr als 0,1 m/s, insbesondere mehr als 0,5 m/s, vorteilhaft mehr als 1 m/s und vorzugsweise mehr als 2 m/s. Es kann insbesondere ein erhöhter Komfort erreicht werden, da eine größere Fläche beheizt werden kann. Durch wenige, große, bewegliche Heizelemente kann auf einfachem Weg eine große, beheizbare Kochfläche erreicht werden. Weiterhin können Material und/oder Bauteile, insbesondere Heizelemente, gespart werden.

Weiterhin wird vorgeschlagen, dass die Kochfeldvorrichtung zumindest ein zweites Heizelement aufweist, das dazu vorgesehen ist, durch die Aktoreinheit bewegt zu werden. Insbesondere weist die Aktoreinheit mehrere Aktoren auf, die dazu vorgesehen sind unterschiedliche der Heizelemente zu bewegen. Insbesondere weist das zweite Heizelement ebenfalls eine längliche Form auf. Vorzugsweise sind die zwei Heizelemente gleich ausgebildet. Es kann insbesondere ein erhöhter Komfort erreicht werden, da eine größere Fläche beheizt werden kann und/oder mit einer größeren Leistung geheizt werden kann.

Ferner wird vorgeschlagen, dass die Aktoreinheit dazu vorgesehen ist, zumindest die zwei Heizelemente auf zumindest im Wesentlichen parallelen Linien, insbesondere parallelen Geraden, zu bewegen. Es kann insbesondere eine einfache Steuerung erreicht werden. Weiterhin wird vorgeschlagen, dass zumindest die zwei Heizelemente dazu vorgesehen sind, in zumindest einem Betriebszustand eine gemeinsame Heizzone zu beheizen. Unter einer "Heizzone" soll ein Bereich, vorteilhaft ein Bereich auf der Kochfeldplatte, verstanden werden, auf dem Gargeschirr aufgestellt werden kann und dem durch einen Bediener eine Heizleistung zugeordnet werden kann. Insbesondere wird die Heizzone durch ein Gargeschirr bestimmt. Darunter, dass zwei Heizelement eine "gemeinsame" Heizzone beheizen, soll insbesondere verstanden werden, dass zwei Heizelemente ein selbes Gargeschirr beheizen, das in der Heizzone angeordnet ist. Es kann insbesondere ein erhöhter Komfort erreicht werden, da eine größere Fläche beheizt werden kann und/oder mit einer größeren Leistung geheizt werden kann.

Vorteilhaft grenzen zumindest die zwei Heizelemente zumindest in einem Betriebszustand, insbesondere in jedem Betriebszustand, aneinander an. Darunter, dass zwei Heizelemente "aneinander angrenzen", soll insbesondere verstanden werden, dass ein Abstand der Heizelemente, insbesondere ein Zwischenraum zwischen den Heizelementen, kleiner ist als 10 %, insbesondere kleiner ist als 5 %, vorzugsweise kleiner ist als 2 %, einer Breite der Heizelemente. Vorzugsweise berühren sich die Heizelemente. Es kann insbesondere eine große, gleichmäßig, insbesondere lückenlos, beheizbare Heizzone bereitgestellt und somit ein Komfort gesteigert werden.

Weiterhin wird vorgeschlagen, dass die Kochfeldvorrichtung zumindest eine erste Sensoreinheit aufweist, die dazu vorgesehen ist, eine Größe, eine Position, eine Form und/oder eine Begrenzung von Gargeschirr, das vorzugsweise auf die Kochfeldplatte aufgestellt ist, zu detektieren. Vorteilhaft ist die Steuereinheit dazu vorgesehen, eine Bewegung zumindest des ersten Heizelements in Abhängigkeit von Sensorwerten der Sensoreinheit zu steuern. Unter einer Sensoreinheit soll insbesondere eine Einheit verstanden werden, die eine zu messende Größe in eine elektrische Größe, insbesondere eine elektrisch auswertbare Größe, vorteilhaft eine elektrische Stromstärke und/oder eine elektrische Spannung, vorzugsweise ein elektrisches, insbesondere digitales, Signal, wandelt. Insbesondere ist die Sensoreinheit zumindest teilweise an dem ersten Heizelement angeordnet. Vorteilhaft ist die Sensoreinheit zumindest teilweise von dem ersten Heizelement gebildet. Insbesondere dient eine induktive Kenngröße eines als Induktionsheizelement ausgebildeten Heizelements als Sensorwert. Insbesondere ist die Steuereinheit dazu vorgesehen das Heizelement zu einem positionierten Gargeschirr hinzubewegen. Es kann insbesondere eine flexible Heizzone erreicht werden.

Vorteilhaft ist die Steuereinheit dazu vorgesehen, zumindest eine Bewegung des ersten Heizelements während zumindest eines Heizvorgangs zu steuern. Insbesondere ist die Steuereinheit dazu vorgesehen, durch die Aktoreinheit zumindest das erste Heizelement unter der Heizzone derart, insbesondere periodisch, zu verfahren, dass es die Heizzone, zumindest teilweise, überstreicht. Es kann insbesondere eine gleichmäßige Wärmeverteilung erreicht werden.

Weiterhin wird vorgeschlagen, dass die Aktoreinheit dazu vorgesehen ist, zumindest das erste Heizelement auf einer Linie zu bewegen, die zumindest im Wesentlichen parallel zu einer Längsrichtung des Heizelements liegt. Es kann insbesondere eine große Heizzone und/oder eine gleichmäßige Wärmeverteilung erreicht werden.

Weitere Vorteile ergeben sich aus der folgenden Zeichnungsbeschreibung. In der Zeichnung sind Ausführungsbeispiele der Erfindung dargestellt.

Es zeigen:
- Fig. 1: ein erfindungsgemäßes Kochfeld in einer schematischen Ansicht von oben,
- Fig. 2: ein weiteres erfindungsgemäßes Kochfeld in einer schematischen Ansicht von oben und
- Fig. 3: ein weiteres erfindungsgemäßes Kochfeld in einer schematischen Ansicht von oben.

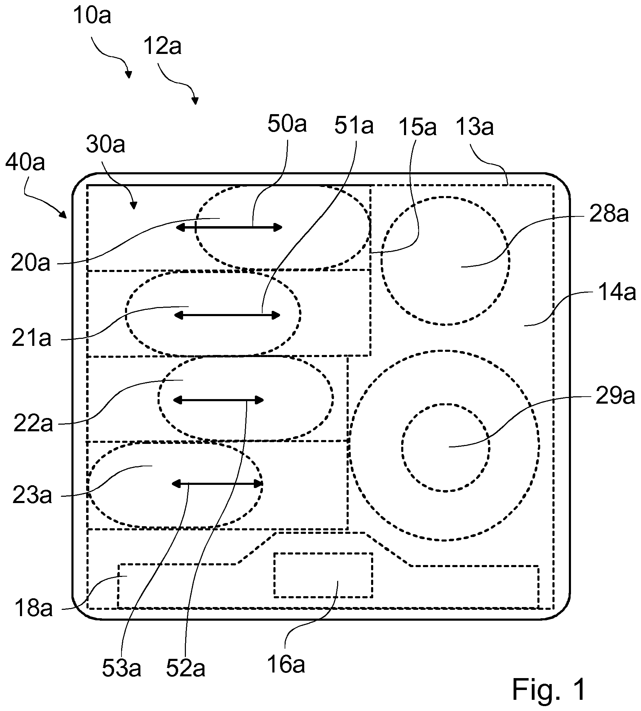

Figur 1 zeigt ein als Induktionskochfeld ausgebildetes Kochfeld 10a mit einer als Induktionskochfeldvorrichtung ausgebildeten Kochfeldvorrichtung 12a. Die Kochfeldvorrichtung 12a weist einen als Schale ausgebildeten Grundkörper 13a, in dem Kochfeldelektronik angeordnet ist, und eine als Glaskeramikplatte ausgebildete Kochfeldplatte 14a auf, die den Grundkörper 13a nach oben abschließt. Die Kochfeldvorrichtung 12a weist ein erstes Heizelement 20a auf, das eine längliche Form aufweist. Es weist eine Länge von 20 cm und eine Breite von 10 cm auf. Weiterhin weist die Kochfeldvorrichtung 12a eine Steuereinheit 16a und eine Bedienerschnittstelle 18a auf. Die Bedienerschnittstelle 18a ist dazu vorgesehen, einem Bediener eine Eingabe von Heizleistungen zu ermöglichen und aktive Heizzonen auf einer Anzeigeeinheit auszugeben. Die Steuereinheit 16a ist dazu vorgesehen, eingegebene und Heizzonen zugeordnete Heizleistungen den Heizelementen 20a, 21a, 22a, 23a, 28a, 29a zuzuordnen und Bewegungen der Heizelemente 20a, 21a, 22a, 23a zu steuern. Ferner weist die Kochfeldvorrichtung 12a eine Aktoreinheit 30a auf, die dazu vorgesehen ist, das erste Heizelement 20a bezüglich des Grundkörpers 13a zu bewegen. Die Kochfeldvorrichtung 12a weist drei weitere Heizelemente 21a, 22a, 23a auf, die dazu vorgesehen sind, durch die Aktoreinheit 30a bewegt zu werden. Die Aktoreinheit 30a ist dazu vorgesehen, die vier Heizelemente 20a, 21a, 22a, 23a auf parallelen Linien 50a, 51a, 52a, 53a zu bewegen, wobei die Linien 50a, 51a, 52a, 53a auf Geraden liegen. Die Heizelemente 21a, 22a, 23a sind gleich ausgebildet wie das Heizelement 20a. Die Heizelemente 20a, 21a, 22a, 23a sind in einem linken Teilbereich des Grundkörpers 13a angeordnet. In einem rechten Teilbereich weist die Kochfeldvorrichtung 12a zwei weitere Heizelemente 28a, 29a auf, die fest montiert sind. Die Heizelemente 28a, 29a weisen eine kreisrunde Form auf. Das Heizelement 29a ist als Zweikreisheizelement mit zwei konzentrischen Heizteilen ausgebildet. Die Heizelemente 20a, 21a, 22a, 23a, 28a, 29a sind als Induktionsheizelemente ausgebildet. Die Heizelemente 20a, 21a, 22a, 23a grenzen in jedem Betriebszustand paarweise aneinander an. Die Heizelemente 20a, 21a, 22a, 23a sind nebeneinander angeordnet, so dass Längsrichtungen der Heizelemente 20a, 21a, 22a, 23a parallel zueinander liegen. Ferner weist die Kochfeldvorrichtung 12a eine Sensoreinheit 40a auf, die dazu vorgesehen ist, Positionen und Begrenzungen von auf der Kochfeldplatte 14a aufgestelltem Gargeschirr zu detektieren. Die Sensoreinheit 40a ist von den als Induktionsheizelementen ausgebildeten Heizelementen 20a, 21a, 22a, 23a gebildet. Durch Bewegung der Heizelemente 20a, 21a, 22a, 23a wird der linke Teilbereich der Kochfeldvorrichtung 12a abgetastet. Befindet sich ein Gargeschirr über einem der Heizelemente 20a, 21a, 22a, 23a ist eine Induktivität des Heizelements 20a, 21a, 22a, 23a erhöht, wobei eine Änderung der Induktivität an einem Rand eines Gargeschirrs besonders stark ist. Die Steuereinheit 16a ist dazu vorgesehen, eine Bewegung der Heizelemente 20a, 21a, 22a, 23a in Abhängigkeit von Sensorwerten der Sensoreinheit 40a zu steuern. Die Heizelemente 20a, 21a, 22a, 23a, die in einem Betriebszustand unter einem einzelnen Gargeschirr angeordnet sind, sind dazu vorgesehen, eine gemeinsame Heizzone, die durch das Gargeschirr, also seine Position, Größe und Form, bestimmt ist, zu beheizen. Beispielsweise können die Heizelemente 20a, 21a und die Heizelemente 22a, 23a dazu verwendet werden, jeweils gemeinsam ein Gargeschirr zu beheizen. Alternativ können drei oder vier der Heizelementen 20a, 21a, 22a, 23a dazu verwendet werden, ein einzelnes Gargeschirr zu beheizen.

Die Steuereinheit 16a ist dazu vorgesehen, eine Bewegung der darunter angeordneten Heizelemente 20a, 21a, 22a, 23a während eines Heizvorgangs zu steuern. Zu Beginn eines Heizvorgangs steuert die Steuereinheit 16a die Aktoreinheit 30a um die Heizelemente 20a, 21a, 22a, 23a unter auf der Kochfeldplatte 14a aufgestelltem Gargeschirr zu zentrieren. Ist ein Gargeschirr größer als ein darunter angeordnetes Heizelement 20a, 21a, 22a, 23a ist die Steuereinheit 16a dazu vorgesehen, die Aktoreinheit 30a anzusteuern, damit dieses die darunter angeordneten Heizelemente 20a, 21a, 22a, 23a unter dem Gargeschirr auf der entsprechenden Linie 50a, 51a, 52a, 53a hin- und herbewegt, um eine Heizleistungsverteilung zu erreichen. Die Aktoreinheit 30a ist dazu vorgesehen, die Heizelemente 20a, 21a, 22a, 23a auf Linien 50a, 51a, 52a, 53a zu bewegen, die parallel zu den Längsrichtungen der Heizelemente 20a, 21a, 22a, 23a liegen. Die Aktoreinheit 30a ist dazu vorgesehen, die Heizelemente 20a, 21a, 22a, 23a unabhängig voneinander zu bewegen. Die Aktoreinheit 30a ist von vier Sätzen Rollen gebildet, auf denen jeweils eines der Heizelemente 20a, 21a, 22a, 23a gelagert ist. Die Sätze von Rollen weisen jeweils neun nebeneinander angeordnete Rollen auf. Die Mittlere der neun Rollen ist dazu vorgesehen, von einem Motor angetrieben zu werden und so das darauf gelagerte Heizelement 20a, 21a, 22a, 23a zu bewegen. Die Heizelemente 20a, 21a, 22a, 23a sind in ihrer Bewegung durch einen Rahmen 15a geführt. Weiterhin weist der Rahmen 15a Führungsschienen auf, die zwischen den Heizelementen 20a, 21a, 22a, 23a angeordnet sind. Die Heizelemente 20a, 21a, 22a, 23a sind um ca. 50 % ihrer Länge beweglich. Die Heizelemente 20a, 21a können um eine Strecke bewegt werden, die länger ist, als eine Strecke, um die die Heizelemente 22a, 23a bewegt werden können, um eine maximale Ausnutzung einer verfügbaren Kochfläche auf der Kochfeldplatte 14a zu erreichen.

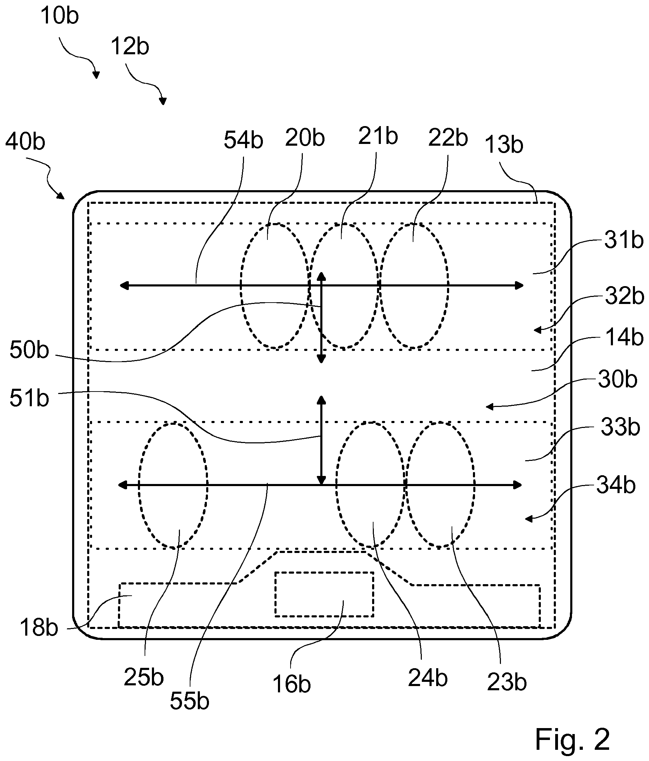

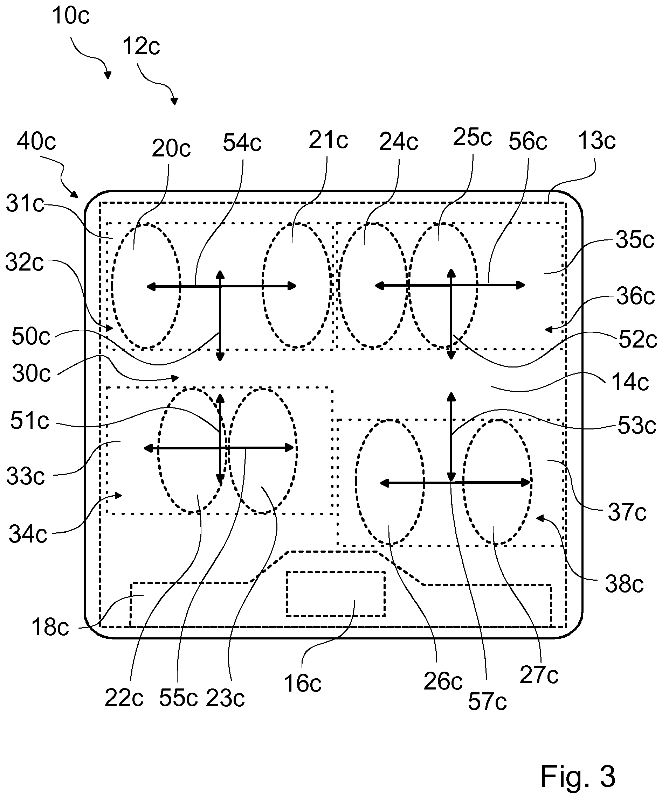

In den Figuren 2 und 3 sind zwei weitere Ausführungsbeispiele der Erfindung gezeigt. Die nachfolgenden Beschreibungen beschränken sich im Wesentlichen auf die Unterschiede zwischen den Ausführungsbeispielen, wobei bezüglich gleichbleibender Bauteile, Merkmale und Funktionen auf die Beschreibung der anderen Ausführungsbeispiele, insbesondere der Figur 1, verwiesen werden kann. Zur Unterscheidung der Ausführungsbeispiele ist der Buchstabe a in den Bezugszeichen des Ausführungsbeispiels in den Figuren 1 durch die Buchstaben b und c in den Bezugszeichen der Ausführungsbeispiele der Figuren 2 und 3 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung der anderen Ausführungsbeispiele, insbesondere der Figur 1, verwiesen werden.

In Figur 2 ist eine nicht erfindungsgemäße Kochfeldvorrichtung 12b dargestellt. Die Kochfeldvorrichtung 12b weist zwei Trägereinheiten 31b, 33b auf. Auf jeder der Trägereinheiten 31b, 33b sind drei als Induktionsheizelemente ausgebildete Heizelemente 20b, 21b, 22b, bzw. 23b, 24b, 25b montiert. Die Heizelemente 20b, 21b, 22b, 23b, 24b, 25b weisen eine elliptische Form auf. Eine Länge der Heizelemente 20b, 21b, 22b, 23b, 24b, 25b beträgt 20 cm und eine Breite beträgt 10 cm. Jede der Trägereinheiten 31b, 33b weist eine Aktoreinheit 32b bzw. 34b auf, die dazu vorgesehen ist, die jeweils auf der Trägereinheit 31b, 33b montierten Heizelemente 20b, 21b, 22b, bzw. 23b, 24b, 25b bezüglich der Trägereinheit 31b, 33b und somit gegenüber einem Grundkörper 13b zu bewegen. Weiterhin weist die Kochfeldvorrichtung 12b eine Aktoreinheit 30b auf, die dazu vorgesehen ist, die Trägereinheiten 31b, 33b und somit die Heizelemente 20b, 21b, 22b, 23b, 24b, 25b bezüglich dem Grundkörper 13b zu bewegen. Die Aktoreinheit 30b ist dazu vorgesehen, die Trägereinheiten 31b, 33b samt der Heizelemente 20b, 21b, 22b, 23b, 24b, 25b entlang von Linien 50b, 51b zu bewegen, die parallel zu Längsrichtungen der Heizelemente 20b, 21b, 22b, 23b, 24b, 25b und auf Geraden liegen. Die Heizelemente 20b, 21b, 22b, 23b, 24b, 25b sind flexibel einsetzbar. Beispielsweise können die Heizelemente 20b, 21b, 22b dazu verwendet werden, gemeinsam ein großes Gargeschirr zu beheizen, während die Heizelemente 23b, 24b dazu verwendet werden, ein mittelgroßes Gargeschirr zu beheizen und das Heizelement 25b ein kleines Gargeschirr beheizt. Alternativ kann, besonders bei niedrigen Heizleistungen, ein einzelnes Heizelement 20b, 21b, 22b, 23b, 24b, 25b dazu verwendet werden, ein großes Gargeschirr zu beheizen, wobei sich das verwendete Heizelement 20b, 21b, 22b, 23b, 24b, 25b unter dem Gargeschirr hin- und herbewegt. Die Heizelemente 20b, 21b, 22b, bzw. 23b, 24b, 25b sind jeweils dazu vorgesehen, auf einer selben Linie 54b, 55b bezüglich der jeweiligen Trägereinheit 31b, 33b bewegt zu werden. Die Trägereinheiten 31b, 33b sind als Platten ausgebildet. Alternativ sind auch Ausgestaltungen denkbar, in denen die Trägereinheiten 31b, 33b als Leisten oder Ähnliches ausgebildete sind.

Figur 3 zeigt eine Ausgestaltung einer Kochfeldvorrichtung 12c, die in Abwandlung von Figur 2 vier Trägereinheiten 31c, 33c, 35c, 37c aufweist, die jeweils zwei Heizelemente 20c, 21c, bzw. 22c, 23c, bzw. 24c, 25c, bzw. 26c, 27c tragen. Eine Aktoreinheit 30c ist dazu vorgesehen, die Trägereinheiten 31c, 33c, 35c, 37c unabhängig voneinander bezügliche eines Grundkörpers 13c zu bewegen. Die Aktoreinheit 30c ist dazu vorgesehen, die Heizelemente 20c, 21c, bzw. 22c, 23c, bzw. 24c, 25c, bzw. 26c, 27c auf Linien 50c, 51c, 52c, 53c, die auf Geraden liegen, zu verschieben, die parallel zu Längsrichtungen der Heizelemente 20c, 21c, 22c, 23c, 24c, 25c, 26c, 27c liegen. Die Trägereinheiten 31c, 33c, 35c, 37c weisen jeweils eine Aktoreinheit 32c, 34c, 36c, 38c auf, die dazu vorgesehen sind, die Heizelemente 20c, 21c, bzw. 22c, 23c, bzw. 24c, 25c, bzw. 26c, 27c auf Linien 54c, 55c, 56c, 57c, die auf Geraden liegen, bezüglich der jeweiligen Trägereinheit 31c, 33c, 35c, 37c zu bewegen. Die zwei Heizelemente 20c, 21c, bzw. 22c, 23c, bzw. 24c, 25c, bzw. 26c, 27c sind dazu vorgesehen, paarweise auf den selben Linien 54c, 55c, 56c, 57c bezüglich der jeweiligen Trägereinheit 31c, 33c, 35c, 37c bewegt zu werden. Durch Überlagerung von Bewegungen durch die Aktoreinheiten 30c und 32c bzw. 34c bzw. 36c bzw. 38c können vielfältige Bewegungsmuster, insbesondere kreisende Bewegungen der Heizelemente 20c, 21c, 22c, 23c, 24c, 25c, 26c, 27c, erzeugt werden.

Durch die beschriebenen Ausgestaltungen kann eine Ausnutzung von großen Teilen einer Kochfläche auf der Kochfeldplatte 14 als Heizzone ermöglicht werden. Die Ausführungsbeispiele nach den Figuren 2 und 3 ermöglichen eine Beheizung der gesamten verfügbaren Kochfläche. Die Linien 50, 51, 52 ,53, 54, 55, 56, 57 beziehen sich jeweils auf Mittelpunkte der Heizelemente 20, 21, 22, 23, 24, 25, 26, 27 bzw. der Trägereinheiten 31, 33, 35, 37.

**Bezugszeichen**

| | | | |
|---|---|---|---|
| 10 | Kochfeld | 40 | Sensoreinheit |
| 12 | Kochfeldvorrichtung | 50 | Linie |
| 13 | Grundkörper | 51 | Linie |
| 14 | Kochfeldplatte | 52 | Linie |
| 15 | Rahmen | 53 | Linie |
| 16 | Steuereinheit | 54 | Linie |
| 18 | Bedienerschnittstelle | 55 | Linie |
| 20 | Heizelement | 56 | Linie |
| 21 | Heizelement | 57 | Linie |
| 22 | Heizelement | | |
| 23 | Heizelement | | |
| 24 | Heizelement | | |
| 25 | Heizelement | | |
| 26 | Heizelement | | |
| 27 | Heizelement | | |
| 28 | Heizelement | | |
| 29 | Heizelement | | |
| 30 | Aktoreinheit | | |
| 31 | Trägereinheit | | |
| 32 | Aktoreinheit | | |
| 33 | Trägereinheit | | |
| 34 | Aktoreinheit | | |
| 35 | Trägereinheit | | |
| 36 | Aktoreinheit | | |
| 37 | Trägereinheit | | |
| 38 | Aktoreinheit | | |

## Patentansprüche

1. Kochfeldvorrichtung, insbesondere Induktionskochfeldvorrichtung, mit zumindest einem Grundkörper (13a-c), zumindest einem ersten Heizelement (20a-23a; 20b-25b; 20c-27c), das eine längliche Form aufweist, mit zumindest einer Steuereinheit (16a-c) und mit zumindest einer Aktoreinheit (30a-c, 32b-c, 34b-c, 36c, 38c), die dazu vorgesehen ist, zumindest das erste Heizelement (20a-23a; 20b-25b; 20c-27c) bezüglich des Grundkörpers (13a-c) zu bewegen, **dadurch gekennzeichnet, dass** die Aktoreinheit (30a-c, 32b-c, 34b-c, 36c, 38c) dazu vorgesehen ist, zumindest das erste Heizelement (20a-23a; 20b-25b; 20c-27c) auf einer Linie (50a-53a; 50b, 51b; 50c-53c) zu bewegen, die zumindest im Wesentlichen parallel zu einer Längsrichtung des Heizelements (20a-23a; 20b-25b; 20c-27c) liegt.

2. Kochfeldvorrichtung nach Anspruch 1, **gekennzeichnet durch** zumindest ein zweites Heizelement (20a-23a; 20b-25b; 20c-27c), das dazu vorgesehen ist, durch die Aktoreinheit (30a-c, 32b-c, 34b-c, 36c, 38c) bewegt zu werden.

3. Kochfeldvorrichtung nach Anspruch 2, **dadurch gekennzeichnet, dass** die Aktoreinheit (30a-c, 32b-c, 34b-c, 36c, 38c) dazu vorgesehen ist, zumindest die zwei Heizelemente (20a-23a; 20b-25b; 20c-27c) auf zumindest im Wesentlichen parallelen Linien (50a-53a; 50b, 51b, 54b, 55b; 50c-57c) zu bewegen.

4. Kochfeldvorrichtung zumindest nach Anspruch 2, **dadurch gekennzeichnet, dass** zumindest die zwei Heizelemente (20a-23a; 20b-25b; 20c-27c) dazu vorgesehen sind, in zumindest einem Betriebszustand eine gemeinsame Heizzone zu beheizen.

5. Kochfeldvorrichtung zumindest nach Anspruch 2, **dadurch gekennzeichnet, dass** zumindest die zwei Heizelemente (20a-23a; 20b-25b; 20c-27c) zumindest in einem Betriebszustand aneinander angrenzen.

6. Kochfeldvorrichtung nach einem der vorhergehenden Ansprüche, **gekennzeichnet durch** zumindest eine erste Sensoreinheit (40), die dazu vorgesehen ist, eine Größe, eine Position, eine Form und/oder eine Begrenzung von Gargeschirr zu detektieren.

7. Kochfeldvorrichtung nach einem der vorhergehenden Ansprüche, **dadurch gekennzeichnet, dass** die Steuereinheit (16a-c) dazu vorgesehen ist, zumindest eine Bewegung des ersten Heizelements (20a-23a; 20b-25b; 20c-27c) während zumindest eines Heizvorgangs zu steuern.

8. Kochfeld mit einer Kochfeldvorrichtung (12a-c) nach einem der vorhergehenden Ansprüche.

9. Verfahren zur Steuerung einer Kochfeldvorrichtung (12a-c), insbesondere einer Induktionskochfeldvorrichtung nach einem der Ansprüche 1 bis 7, mit zumindest einem Grundkörper (13a-c), zumindest einem ersten Heizelement (20a-23a; 20b-25b; 20c-27c), das eine längliche Form aufweist, mit zumindest einer Steuereinheit (16a-c) und mit zumindest einer Aktoreinheit (30a-c, 32b-c, 34b-c, 36c, 38c), mittels welcher zumindest das erste Heizelement (20a-23a; 20b-25b; 20c-27c) bezüglich des Grundkörpers (13a-c) bewegt wird, **dadurch gekennzeichnet, dass** mittels der Aktoreinheit (30a-c, 32b-c, 34b-c, 36c, 38c) zumindest das erste Heizelement (20a-23a; 20b-25b; 20c-27c) auf einer Linie (50a-53a; 50b, 51b; 50c-53c) bewegt wird, die zumindest im Wesentlichen parallel zu einer Längsrichtung des Heizelements (20a-23a; 20b-25b; 20c-27c) liegt.

## Claims

1. Hob apparatus, in particular induction hob apparatus, with at least one main body (13a-c), at least one first heating element (20a-23a; 20b-25b; 20c-27c), which has an elongated form, with at least one control unit (16a-c) and with at least one actuator unit (30a-c, 32b-c, 34b-c, 36c, 38c), which is provided to move at least the first heating element (20a-23a; 20b-25b; 20c-27c) in relation to the main body (13a-c), **characterised in that** the actuator unit (30a-c, 32b-c, 34b-c, 36c, 38c) is provided to move at least the first heating element (20a-23a; 20b-25b; 20c-27c) on a line (50a-53a; 50b, 5 1b; 50-53c) which lies at least essentially parallel to a longitudinal direction of the heating element (20a-23a; 20b-25b; 20c-27c).

2. Hob apparatus according to claim 1, **characterised by** at least one second heating element (20a-23a; 20b-25b; 20c-27c), which is provided to be moved by the actuator unit (30a-c, 32b-c, 34b-c, 36c, 38c).

3. Hob apparatus according to claim 2, **characterised in that** the actuator unit (30a-c, 32b-c, 34b-c, 36c, 38c) is provided to move at least the two heating elements (20a-23a; 20b-25b; 20c-27c) on at least essentially parallel lines (50a-53a; 50b, 51b, 54b, 55b; 50c-57c).

4. Hob apparatus at least according to claim 2, **characterised in that** at least the two heating elements (20a-23a; 20b-25b; 20c-27c) are provided to heat a common heating zone in at least one operating state.

5. Hob apparatus at least according to claim 2, **characterised in that** at least the two heating elements (20a-23a; 20b-25b; 20c-27c) are adjacent to one another at least in an operating state.

6. Hob apparatus according to one of the preceding claims, **characterised by** at least one first sensor unit (40), which is provided to detect a size, a position, a shape and/or a boundary of cooking utensils.

7. Hob apparatus according to one of the preceding claims, **characterised in that** the control unit (16a-c) is provided to control at least one movement of the first heating element (20a-23a; 20b-25b; 20c-27c) during at least one heating procedure.

8. Hob with a hob apparatus (12a-c) according to one of the preceding claims.

9. Method for controlling a hob apparatus (12a-c), in particular an induction hob apparatus according to one of claims 1 to 7, with at least one main body (13a-c), at least one first heating element (20a-23a; 20b-25b; 20c-27c), which has an elongated form, with at least one control unit (16a-c) and with at least one actuator unit (30a-c, 32b-c, 34b-c, 36c, 38c), by means of which at least the first heating element (20a-23a; 20b-25b; 20c-27c) is moved in relation to the main body (13a-c), **characterised in that** at least the first heating element (20a-23a; 20b-25b; 20c-27c) is moved on a line (50a-53a; 50b, 51b; 50-53c), which lies at least essentially parallel to a longitudinal direction of the heating element (20a-23a; 20b-25b; 20c-27c), by means of the actuator unit (30a-c, 32b-c, 34b-c, 36c, 38c).

## Revendications

1. Dispositif de champ de cuisson, en particulier dispositif de champ de cuisson à induction, avec au moins un corps de base (13a-c), au moins un premier élément chauffant (20a-23a ; 20b-25b ; 20c-27c), qui présente une forme oblongue, avec au moins une unité de commande (16a-c) et avec au moins une unité d'actionneur (30a-c, 32b-c, 34b-c, 36c, 38c), prévue afin de déplacer au moins le premier élément chauffant (20a-23a ; 20b-25b ; 20c-27c) par rapport au corps de base (13a-c), **caractérisé en ce que** l'unité d'actionneur (30a-c, 32b-c, 34b-c, 36c, 38c) est prévue afin de déplacer au moins le premier élément chauffant (20a-23a ; 20b-25b ; 20c-27c) sur une ligne (50a-53a ; 50b, 51b ; 50c-53c) au moins essentiellement parallèle à une direction longitudinale de l'élément chauffant (20a-23a ; 20b-25b ; 20c-27c).

2. Dispositif de champ de cuisson selon la revendication 1, **caractérisé par** au moins un deuxième élément chauffant (20a-23a ; 20b-25b ; 20c-27c) prévu afin d'être déplacé par l'unité d'actionneur (30a-c, 32b-c, 34b-c, 36c, 38c).

3. Dispositif de champ de cuisson selon la revendication 2, **caractérisé en ce que** l'unité d'actionneur (30a-c, 32b-c, 34b-c, 36c, 38c) est prévue afin de déplacer au moins les deux éléments chauffants (20a-23a ; 20b-25b ; 20c-27c) sur des lignes au moins essentiellement parallèles (50a-53a ; 50b, 51b, 54b, 55b ; 50c-57c).

4. Dispositif de champ de cuisson au moins selon la revendication 2, **caractérisé en ce qu'**au moins les deux éléments chauffants (20a-23a ; 20b-25b ; 20c-27c) sont prévus afin de chauffer, dans au moins un état de fonctionnement, une zone chauffante commune.

5. Dispositif de champ de cuisson au moins selon la revendication 2, **caractérisé en ce qu'**au moins les deux éléments chauffants (20a-23a ; 20b-25b ; 20c-27c) sont, dans au moins un état de fonctionnement, contigus.

6. Dispositif de champ de cuisson selon l'une des revendications précédentes, **caractérisé par** au moins une première unité de capteurs (40), prévue afin de détecter une taille, une position, une forme et/ou une délimitation des éléments de batterie de cuisine.

7. Dispositif de champ de cuisson selon l'une des revendications précédentes, **caractérisé en ce que** l'unité de commande (16a-c) est prévue afin de commander au moins un déplacement du premier élément chauffant (20a-23a ; 20b-25b ; 20c-27c) durant au moins un processus de chauffe.

8. Champ de cuisson avec un dispositif de champ de cuisson (12a-c) selon l'une des revendications précédentes.

9. Procédé de commande d'un dispositif de champ de cuisson (12a-c), en particulier d'un dispositif de champ de cuisson à induction selon l'une des revendications 1 à 7, avec au moins un corps de base (13a-c), au moins un premier élément chauffant (20a-23a ; 20b-25b ; 20c-27c), qui présente une forme oblongue, avec au moins une unité de commande (16a-c) et avec au moins une unité d'actionneur (30a-c, 32b-c, 34b-c, 36c, 38c), au moyen de laquelle au moins le premier élément chauffant (20a-23a ; 20b-25b ; 20c-27c) est déplacé par rapport au corps de base (13a-c), **caractérisé en ce qu'**au moyen de l'unité d'actionneur (30a-c, 32b-c, 34b-c, 36c, 38c) au moins le premier élément chauffant (20a-23a ; 20b-25b ; 20c-27c) se trouve sur une ligne (50a-53a ; 50b, 51b ; 50c-53c) au moins essentiellement parallèle à une direction longitudinale de l'élément chauffant (20a-23a ; 20b-25b ; 20c-27c).
